# EUROPEAN PATENT SPECIFICATION

(11) **EP 4 021 726 B1**
(45) Date of publication and mention of the grant of the patent: **25.12.2024**
(21) Application number: 20858704.8
(22) Date of filing: 25.08.2020
(51) Int. Cl.: B33Y 30/00, B22F 10/28, B22F 12/30

(54) **A POWDER BED ADDITIVE MANUFACTURING MACHINE**
MASCHINE ZUR GENERATIVEN PULVERBETTFERTIGUNG
MACHINE DE FABRICATION ADDITIVE SUR LIT DE POUDRE

(30) Priority: 29.08.2019 TR 201913130
(43) Date of publication of application: 06.07.2022
(73) Proprietor: Tusas- Turk Havacilik Ve Uzay Sanayii Anonim Sirketi, 06980 Kazan/Ankara (TR)
(72) Inventor: YAVAS, Hakan, 06980 Ankara (TR); TANRIKULU, Ahmet Alptug, 06980 Ankara (TR); ECE, Remzi Ecmel, 06980 Ankara (TR)
(74) Representative: Sevinç, Cenk
(86) International application number: PCT/TR2020/050752
(87) International publication number: WO 2021/040658

(56) References cited:
- EP-A1- 3 501 695
- WO-A1-2015/170330
- CN-A- 107 486 556
- CN-A- 110 539 485
- US-A1- 2017 120 519
- US-A1- 2017 282 462
- US-A1- 2019 030 603

## Description

The present invention relates to a table provided in powder bed additive manufacturing machines.

The additive manufacturing is a production method which enables production of useful three-dimensional parts and/or prototypes by laying suitable powders or thin wires on top of each other using a three-dimensional geometric model, subjecting them to heat treatment with a printing tip and combining them as layers on top of each other. Additive manufacturing is used when manufacturing with metal, ceramic or polymer materials. Since a desired design can be achieved by such a production method, it is possible to produce parts with complex geometries which cannot be produced by conventional production methods. Within the scope of rapidly developing aviation and space technologies, production of metal materials by additive manufacturing technology is rapidly gaining importance.

Many methods are provided in the production of metal parts by additive manufacturing.

These are classified as: selective laser sintering, direct metal deposition, electron beam melting, shape deposition manufacturing and wire arc additive manufacturing. Additive manufacturing techniques are classified as wire- or powder-based according to the raw material usage; and it is classified as laser, electron beam and electric arc according to the heat source.

In additive manufacturing machines where powder is used as the raw material, porosity may occur in the part and deformations may occur in some areas based on residual strain since it is a powder-based production method, which seriously affects the mechanical performance of the material. Such errors may cause sudden breakage during use.

Chinese patent document CN105458264B, which is included in the known state of the art, discloses powder or wire fed additive manufacturing methods. The system comprises a motor that provides mechanical vibration to powder particles. Thanks to the mechanical vibration, it is enabled that gaps between the powder particles in the table are reduced and the texture becomes more homogeneous. Therefore, porosity, residue, and lack of melting are reduced or completely eliminated. However, it cannot provide a solution for protecting the equipment which may be damaged by the heat of the table.

Similar to patent document CN105458264B, patent documents EP3501695A1,

US2019030603A1, CN107486556A and US2017282462A1 disclose systems and method for producing three-dimensional objects using additive manufacturing. However, those documents also fail to provide a solution for protecting the equipment which may be damaged by the heat of the table.

Thanks to the application developed by the present invention, the equipment that can be integrated into powder bed additive manufacturing machines is enabled to be protected from the heat of the table. Therefore, lifecycle of the equipment is increased and maintenance costs are reduced.

Another object of the present invention is to improve the powder bed additive manufacturing process used in several industries.

The invention is defined by the independent claim 1.

Preferred embodiments are defined by the dependent claims.

The powder bed additive manufacturing machine realized to achieve the object of the invention and defined in the first claim and the other claims dependent thereon comprises a body; a table which is connected to the body and allows powders to be laid thereon by means of a laying apparatus; a layer which is created by sintering or fusing the powders on the table; a part which is produced by depositing the layers using additive manufacturing method; and at least one heat source which is provided at the body and applies heat treatment to the powders on a top surface of the table.

The powder bed additive manufacturing machine of the present invention comprises a coating applied on the table, formed by using an insulating material, and preventing transfer of heat of the table to the table's surroundings.

In an embodiment of the invention, the powder bed additive manufacturing machine comprises a coating which is produced by using a ceramic material.

In an embodiment of the invention, the powder bed additive manufacturing machine comprises a coating which is produced by physical vapour deposition method.

The powder bed additive manufacturing machine comprises a floor on which the body is provided; and at least one motor enabling movement of the table such that the motor is between the floor and the table.

In an embodiment of the invention, the powder bed additive manufacturing machine comprises a motor which provides mechanical or ultrasonic vibration movement such that the motor is between the floor and the table.

The powder bed additive manufacturing machine comprises a coating which is applied on the table such that the coating is between the motor and the table.

The powder bed additive manufacturing machine comprises a coating which is fully applied on bottom surface of the table.

The powder bed additive manufacturing machine comprises a paste which is provided between the motor and the coating and allows the motor to adhere to the table.

In an embodiment of the invention, the powder bed additive manufacturing machine comprises a paste which is formed by using a ceramic material.

In an embodiment of the invention, the powder bed additive manufacturing machine comprises a control unit which allows control of power, frequency, amplitude, and time parameters of the motor.

In an embodiment of the invention, the powder bed additive manufacturing machine comprises a control unit which allows the heat source to be controlled.

The powder bed additive manufacturing machine realized to achieve the object of the present invention is illustrated in the attached drawings, in which:
Figure 1 is a schematic view of a powder bed additive manufacturing machine.
Figure 2 is a sectional view of a powder bed additive manufacturing machine.
Figure 3 is a schematic view of a motor, a paste and a coating.
Figure 4 is a schematic view of an alternative embodiment of a powder bed additive manufacturing machine.

All the parts illustrated in figures are individually assigned a reference numeral and the corresponding terms of these numbers are listed as follows:
- (1): Power bed additive manufacturing machine
- (2): Body
- (3): Table
- (4): Heat source
- (5): Coating
- (6): Motor
- (7): Paste
- (8): Control unit
- (T): Powders
- (S): Laying Apparatus
- (L): Layer
- (P): Part

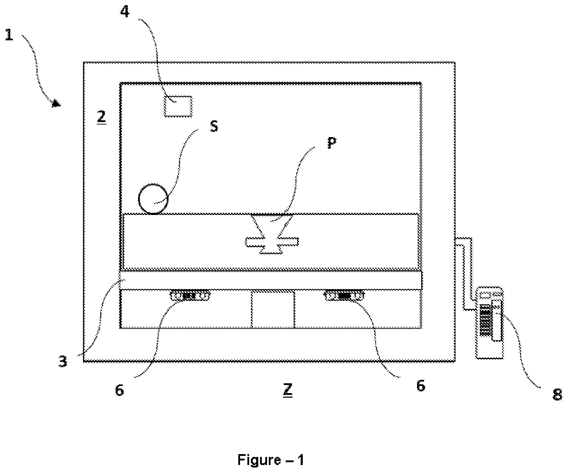

The powder bed additive manufacturing machine (1) comprises a body (2); a table (3) which is located on the body (2) and allows powders (T) to be laid thereon by means of a laying apparatus (S); a layer (L) which is created by sintering or fusing the powders (T) laid on the table (3); a part (P) which is produced by depositing the layers (L) on top of each other using additive manufacturing method; and at least one heat source (4) which is located on the body (2) and applies heat treatment to the powders (T) laid on the table (3) (Figure 1).

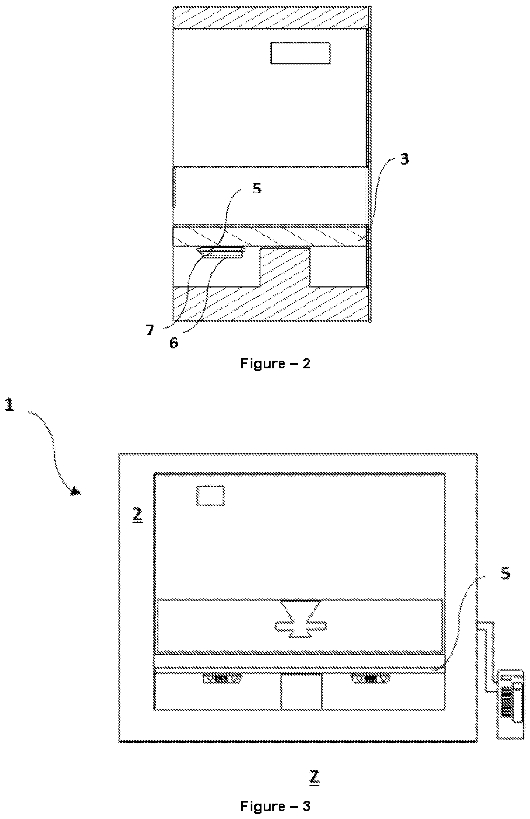

The powder bed additive manufacturing machine (1) of the present invention comprises a coating (5) located on the table (3), made of an insulating material, and almost completely preventing transfer of heat of the table (3) to the surroundings of the table (3) (Figure 2).

The part (P) is produced on the table (3) provided at the body (2). Powders (T) are transferred to the table (3) by means of the laying apparatus (S). Powders (T) transferred to the table (3) are sintered or fused by the heat source (4), so that a first layer (L) correspondent with a predetermined three-dimensional geometric model is created. The additive manufacturing process continues by depositing the layers on top of each other until the final part (P) is created.

The table (3) provided in powder bed additive manufacturing machines (1) operates at high temperatures (400 to 1100 C^°). Such temperatures may damage the equipment around the table (3). For that reason, coating (5) to be applied on the table (3) enables the equipment around the table (3) to be protected from the heat of the table (3).

In an embodiment of the invention, the powder bed additive manufacturing machine (1) comprises a coating (5) which is made of a ceramic material. Therefore, ceramic coating (5) applied on the table (3) enables that heat of the table (3) is not transferred to its surroundings, thanks to its insulation feature.

In an embodiment of the invention, the powder bed additive manufacturing machine (1) comprises a coating (5) which is produced by physical vapour deposition method. In the physical vapour deposition method, material to be coated is evaporated in a vacuum environment with a heater and deposited on a surface, on which coating (5) will be applied, as a thin film layer. The coating (5) process can be performed at lower temperatures with the physical vapour deposition method. Therefore, it does not affect the properties of the material to be coated. It increases the quality thanks to its high level adhesion to the surface and the denser coating (5) structure.

The powder bed additive manufacturing machine (1) comprises a floor (Z) on which the body (2) is located; and at least one motor (6) located between the floor (Z) and the table (3) and enabling movement of the table (3). Motor (6) allows the table (3) to be vibrated and/or moved.

In an embodiment of the invention, the powder bed additive manufacturing machine (1) comprises a motor (6) which is located between the floor (Z) and the table (3) and provides mechanical or ultrasonic vibration. The table (3) triggered by the motor (6) provides movement of the powders (T) thereon, and thus, providing almost complete absence of porosity between the powders (T).

In an embodiment of the invention, the powder bed additive manufacturing machine (1) comprises a coating (5) which is located on the table (3) such that the coating (5) is between the motor (6) and the table (3). The coating (5) protects the motor (6) that vibrates the table (3) from the heat of the table (3). Therefore, lifecycle of the motor (6) is increased and maintenance costs are reduced.

The powder bed additive manufacturing machine (1) comprises a coating (5) which almost completely surrounds a surface of the table (3) facing the floor (Z). The coating (5) is applied on the entire bottom surface of the table (3) (Figure 3).

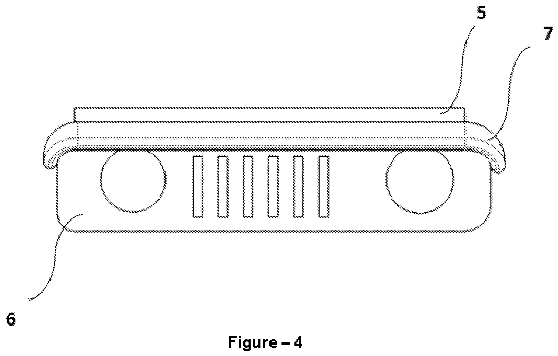

In the invention, powder bed additive manufacturing machine (1) comprises a paste (7) which is located between the motor (6) and the coating (5) and allows the motor (6) to adhere to the table (3) (Figure 4).

In an embodiment of the invention, the powder bed additive manufacturing machine (1) comprises a paste (7) which is made of a ceramic material. A ceramic material-based paste (7) with a low thermal conductivity coefficient is used, which allows the motor (6) to adhere to the coating (5)

In an embodiment of the invention, the powder bed additive manufacturing machine (1) comprises a control unit which allows control of at least one of power, frequency, amplitude and time parameters of the motor (6) providing vibration. After appropriate parameters are detected, the motor (6) is controlled by the control unit (8) during manufacturing process.

In an embodiment of the invention, the powder bed additive manufacturing machine (1) comprises a control unit (8) which allows the heat source (4) to be controlled. Position and operating status of the heat source (4) is controlled by the control unit (8).

## Claims

1. A powder bed additive manufacturing machine (1) comprising a body (2); a table (3) which is located on the body (2) and allows powders (T) to be laid thereon by means of a laying apparatus (S); a layer (L) which is created by sintering or fusing the powders (T) laid on the table (3); a part (P) which is produced by depositing the layers (L) on top of each other using additive manufacturing method; and at least one heat source (4) which is located on the body (2) and applies heat treatment to the powders (T) laid on the table (3), **characterized by** a floor (Z) on which the body (2) is located; at least one motor (6) located between the floor (Z) and the table (3) and enabling movement of the table (3); a coating (5) located on the table (3) such that the coating (5) is between the motor (6) and the table (3), wherein said coating (5) made of an insulating material to prevent transfer of heat of the table (3) to the surroundings of the table (3), wherein said coating (5) surrounds a surface of the table (3) facing the floor (Z); and a paste (7) which is located between the motor (6) and the coating (5) and allows the motor (6) to adhere to the table (3).

2. A powder bed additive manufacturing machine (1) according to claim 1, **characterized by** a coating (5) which is made of a ceramic material.

3. A powder bed additive manufacturing machine (1) according to claim 1 or claim 2, **characterized by** a coating (5) which is produced by physical vapour deposition method.

4. A powder bed additive manufacturing machine (1) according to any of the preceding claims, **characterized by** a motor (6) which is located between the floor (Z) and the table (3) and provides mechanical or ultrasonic vibration.

5. A powder bed additive manufacturing machine (1) according to any of the preceding claims, **characterized by** a paste (7) which is made of a ceramic material.

## Patentansprüche

1. Maschine zur additiven Fertigung im Pulverbett (1), umfassend einen Körper (2); einen Tisch (3), der auf dem Körper (2) angeordnet ist und auf den Pulver (T) mittels einer Legevorrichtung (S) gelegt werden können; eine Schicht (L), die durch Sintern oder Schmelzen der auf den Tisch (3) gelegten Pulver (T) erzeugt wird; ein Teil (P), das durch Aufbringen der Schichten (L) übereinander mittels eines additiven Herstellungsverfahrens hergestellt wird; und mindestens eine Wärmequelle (4), die sich auf dem Körper (2) befindet und eine Wärmebehandlung auf die auf dem Tisch (3) abgelegten Pulver (T) anwendet, **dadurch gekennzeichnet, dass** ein Boden (Z), auf dem sich der Körper (2) befindet; mindestens einen Motor (6), der sich zwischen dem Boden (Z) und dem Tisch (3) befindet und die Bewegung des Tisches (3) ermöglicht; eine Beschichtung (5), die sich auf dem Tisch (3) befindet, so dass sich die Beschichtung (5) zwischen dem Motor (6) und dem Tisch (3) befindet, wobei die Beschichtung (5) aus einem isolierenden Material besteht, um die Übertragung von Wärme des Tisches (3) auf die Umgebung des Tisches (3) zu verhindern, wobei die Beschichtung (5) eine dem Boden (Z) zugewandte Oberfläche des Tisches (3) umgibt; und eine Paste (7), die sich zwischen dem Motor (6) und der Beschichtung (5) befindet und es dem Motor (6) ermöglicht, an dem Tisch (3) zu haften.

2. Maschine zur additiven Fertigung im Pulverbett (1) nach Anspruch 1, **dadurch gekennzeichnet, dass** die Beschichtung (5) aus einem keramischen Material hergestellt ist.

3. Maschine zur additiven Fertigung im Pulverbett (1) nach Anspruch 1 oder Anspruch 2, **dadurch gekennzeichnet, dass** die Beschichtung (5) durch ein physikalisches Gasphasenabscheidungsverfahren hergestellt wird.

4. Maschine zur additiven Fertigung im Pulverbett (1) nach einem der vorhergehenden Ansprüche, **dadurch gekennzeichnet, dass** ein Motor (6) zwischen dem Boden (Z) und dem Tisch (3) angeordnet ist und mechanische oder Ultraschall-Vibrationen erzeugt.

5. Maschine zur additiven Fertigung im Pulverbett (1) nach einem der vorhergehenden Ansprüche, **dadurch gekennzeichnet, dass** die Paste (7) aus einem keramischen Material hergestellt ist.

## Revendications

1. Machine de fabrication additive sur lit de poudre (1) comprenant un corps (2) ; une table (3) qui est située sur le corps (2) et qui permet de déposer des poudres (T) au-dessus au moyen d'un appareil de pose (S) ; une couche (L) qui est créée par frittage ou par fusion des poudres (T) déposées sur la table (3); une pièce (P) qui est produite en déposant les couches (L) les unes sur les autres à l'aide d'un procédé de fabrication additive ; et au moins une source de chaleur (4) qui est située sur le corps (2) et qui applique un traitement thermique aux poudres (T) déposées sur la table (3), **caractérisée par** un sol (Z) sur lequel se trouve le corps (2); au moins un moteur (6) situé entre le sol (Z) et la table (3) et permettant le déplacement de la table (3) ; un revêtement (5) situé sur la table (3) de telle sorte que le revêtement (5) se trouve entre le moteur (6) et la table (3), dans lequel ledit revêtement (5) est constitué d'un matériau isolant pour empêcher le transfert de chaleur de la table (3) aux alentours de la table (3), dans lequel ledit revêtement (5) entoure une surface de la table (3) faisant face au sol (Z) ; et une pâte (7) qui se situe entre le moteur (6) et le revêtement (5) et qui permet au moteur (6) d'adhérer à la table (3).

2. Machine de fabrication additive sur lit de poudre (1) selon la revendication 1, **caractérisée par** un revêtement (5) qui est constitué d'un matériau céramique.

3. Machine de fabrication additive sur lit de poudre (1) selon la revendication 1 ou la revendication 2, **caractérisée par** un revêtement (5) qui est produit par un procédé de dépôt physique en phase vapeur.

4. Machine de fabrication additive sur lit de poudre (1) selon l'une quelconque des revendications précédentes, **caractérisée par** un moteur (6) qui est situé entre le sol (Z) et la table (3) et qui fournit une vibration mécanique ou ultrasonique.

5. Machine de fabrication additive sur lit de poudre (1) selon l'une quelconque des revendications précédentes, **caractérisée par** une pâte (7) qui est réalisée d'un matériau céramique.
